# EUROPEAN PATENT APPLICATION

(11) **EP 4 245 869 A1**
(43) Date of publication of application: **20.09.2023**
(21) Application number: 22162603.9
(22) Date of filing: 17.03.2022
(51) Int. Cl.: C22B 3/08, C22B 3/42, C22B 26/12, C22B 15/00, C22B 3/00, C22B 47/00, B01J 39/04

(54) **METHOD FOR PROCESSING BLACK MASS TO BATTERY CHEMICALS**

(71) Applicant: Fortum OYJ, 02150 Espoo (FI)
(72) Inventor: KIVELÄ, Paula, 02150 Espoo (FI); EKMAN, Peik, 02150 Espoo (FI); LAPPALAINEN, Elina, 02150 Espoo (FI); HAAPALA, Katja, 02150 Espoo (FI); KAUPPINEN, Pasi, 02150 Espoo (FI); EKMAN, Kenneth, 02150 Espoo (FI)
(74) Representative: Laine IP Oy

(57) **Abstract**

According to an example aspect of the present invention, there is provided a method for processing a black mass to battery chemicals. The method comprises leaching the black mass using sulfuric acid and a reducing agent to produce a first process solution comprising lithium sulfate and at least one of manganese sulfate, copper sulfate, nickel sulfate and cobalt sulfate, and impurities, which first process solution is separated from graphite by filtration. Thereafter, the process comprises removing impurities from the first process solution using lithium hydroxide, to produce a second process solution, separating lithium from the second process solution using chromatographic lithium separation producing lithium sulfate and a third process solution and separating at least one of copper, nickel and cobalt from the third process solution by ion exchange producing lithium sulfate. Finally, the process comprises converting the lithium sulfate produced by electrodialysis to lithium and to sulfuric acid to be used in the method.

## Description

### FIELD

The present invention relates to the recovery of nickel, cobalt, manganese and lithium from a black mass, and the separation and purification thereof.

### BACKGROUND

As both customer demand and technology readiness for electric appliances and vehicles increase, lithium ion batteries (LIBs) are becoming more important to fill the role for mobile energy storage. While invented in 1985, recent developments to increase energy density and production costs have seen a large increase in demand for LIBs. The current most common LIB types for electric mobility are based on nickel, cobalt and manganese (NCM) or nickel, cobalt and aluminum (NCA) as cathode materials and graphite as anode material. Even though effective, the current price for virgin materials makes these technologies quite expensive to deploy while also causing significant greenhouse gas (GHG) emissions during mining and processing to battery grade chemicals.

In recent years, there has been a significant uptick in efforts to mitigate the prices and emissions caused by LIB production by recycling end-of-life batteries. Routes for recycling are several, including pyro- and hydrometallurgical routes for metal recovery and separation. Currently, the majority of the batteries that are recycled are introduced in existing pyrometallurgical facilities, such as smelters. Hydrometallurgical routes, or combinations of routes, are currently being built and tested around the world, and reductive roasting followed by leaching of lithium is emerging as a potential route for recovery of lithium. This technology is a first-step lithium recovery method requiring high temperatures (> 500 °C) and expensive reducing agents (e.g. hydrogen or coal) which increase the carbon dioxide (CO₂) footprint of the process significantly.

The primary lithium production is concentrated to South America, where lithium-rich brine is pumped into massive evaporation pools where it is concentrated by solar evaporation. This process takes up to two years. The lithium concentrate is then processed into lithium carbonate, and then eventually turned into lithium hydroxide by a conversion reaction with lime and crystallized by evaporation. The emergence of low-cobalt cathode materials favors hydroxide as lithium source, which is more readily processed from solid ore.

Methods to recycle lithium batteries are generally split into two main parts: mechanical handling and component recycling. In mechanical handling batteries are dismantled, shred and separated into its main constituents: casings, electrode foils, electrolytes, plastics and the electrode materials. These components are then further processed to produce products.

In hydrometallurgical routes, a mixture of electrode materials commonly referred to as black mass is often leached using a combination of an inorganic acid, e.g. sulfuric acid, and a reducing agent to dissolve the soluble elements after which the insoluble materials (e.g. graphite) can be separated by filtration. Metals are then separated from each other and/or purified using pH adjustments, or with liquid-liquid extraction technologies. The black mass is expected to contain 3-4 wt-% lithium. The process solution is expected to contain 2.5-4.5 g/l of lithium, but the lithium content may also be higher depending on the black mass or the leaching step conditions.

Nickel, cobalt and manganese content varies depending on the CAM (cathode active material) chemistry. Other elements present may be aluminium and copper (from electrode foils), fluoride and phosphorous (from the electrolyte salt, lithium hexaflorophosphate) and various miscible organic solvents and their degradation products (from the electrolyte solvent) as well as graphite from the anode active material (AAM) and plastics (from separator material). The aforementioned separation technologies, while widely used and robust, pose certain issues. pH control and/or saponification in extractions are normally conducted by using sodium or ammonium hydroxide or sodium carbonate. Hence, after separation of metals, sodium- or ammonium sulfate is left in the process liquor and cannot be discharged into the environment which increases the overall cost of the process if water purification is required. In liquid-liquid extraction, the kerosene is replaced at regular intervals due to fouling, which increases the CO₂-output of the process significantly.

Document CN 109402394 A discloses a method for recycling valuable metals from lithium ion battery electrode waste. The document teaches that leaching the electrode waste and then adjusting pH with sodium hydroxide, potassium hydroxide or lithium hydroxide, a precipitation slag of mixed nickel, cobalt and manganese hydroxides and a lithium sulfate solution can be produced. The lithium sulfate solution is subjected to an electrodialysis step, producing a lithium hydroxide solution. The lithium hydroxide is crystallized by evaporation. The resulting lithium hydroxide concentrate after evaporation can be optionally circulated back in the process, which would also recirculate more impurities into the process. Mixed use of sodium, potassium and lithium hydroxides will cause severe difficulties to produce pure products and achieve battery-grades of the end product. Furthermore, separation of the elements will create waste fractions.

Document CN 108517409 A discloses a method in which waste battery cathode material is subjected to a leaching step, purification step and co-extraction steps for nickel, cobalt, manganese and lithium. After the co-extraction step, the resulting lithium sulfate can be subjected to an electrodialysis step and a crystallization step, from which the concentrated mother liquor can be circulated back to the purification step and the resulting sulfuric acid returned to the leaching step. Similarly to CN 109402394, this process yields a mixture of metals and circulating the mother liquor will lead to a buildup of impurities in the purification stage.

Therefore, to increase the sustainability of recovering metals from spent batteries and to reduce the environmental impact of recycling spent batteries, there is a need for reducing the amount of wastewater generation and the overall CO₂ footprint of the process and recycling lithium effectively in the process.

### OBJECTS AND SUMMARY OF THE INVENTION

An object of the present invention is to provide a method for processing a black mass into nickel, cobalt, manganese and lithium products in a sustainable and environmentally friendly way. A further object of the present invention is to purify and separate metals while avoiding the use of caustic soda, ammonia or other chemicals that would require additional downstream processing. By producing process chemicals *in-situ* from the intermediate products of the process such as from the method described European Patent Application No. 20206690.8, process chemicals can be recirculated in the process, thus avoiding the need for discharging of e.g. sodium sulfate or the use of ammonium and sodium products. For avoidance of doubt, *in-situ* production means production of the process chemicals in the required quantity when needed, by utilizing lithium salt generated in the process.

In addition, an object of the present invention is to provide a method for recycling lithium and for producing lithium products.

According to an aspect of the present invention, there is provided a method for processing a black mass to battery chemicals comprising steps of:
1) leaching the black mass using sulfuric acid and a reducing agent to produce a first process solution comprising lithium sulfate and at least one of manganese sulfate, copper sulfate, nickel sulfate and cobalt sulfate, and impurities, which first process solution is separated from graphite by filtration;
2) removing impurities from the first process solution using lithium hydroxide, to produce a second process solution;
3) separating lithium from the second process solution using chromatographic lithium separation producing lithium sulfate and a third process solution;
4) separating at least one of copper, nickel and cobalt from the third process solution by ion exchange producing lithium sulfate; and
5) converting the lithium sulfate produced in step 3) and/or 4) by electrodialysis to lithium hydroxide to be used in at least one of the steps 2), 3) and 4), and to sulfuric acid to be used in step 1).

### BRIEF DESCRIPTION OF THE DRAWINGS

FIGURE 1 illustrates a method for processing a black mass to battery chemicals in accordance with a first embodiment;
FIGURE 2 illustrates a method for processing a black mass to battery chemicals in accordance with a second embodiment;
FIGURE 3 illustrates a method for processing a black mass to battery chemicals in accordance with a third embodiment;
FIGURE 4 illustrates a method for processing a black mass to battery chemicals in accordance with a fourth embodiment; and
FIGURE 5 illustrates chromatographic separation of lithium.

### DETAILED DESCRIPTION

In the present context, the term "black mass" refers to a mixture of cathode and/or anode active materials, which are separated from battery components. The black mass can be either from spent or fresh/unused Li-ion batteries processed using any number of mechanical routes and/or from off-specification cathode active material (CAM).

In the present context, the term "cathode active material (CAM)" refers for example to a lithium-containing cathode material based on nickel, cobalt and aluminum (NCA) or a cathode material based on nickel, cobalt and manganese (NCM). Any other cathode active materials that contain lithium can be also used in the present method.

In the present context, the term "bed volume" refers to a volume of a resin bed when packed into a column.

By "removing" it is meant in this description that at least 90 wt-% of the desired elements or compounds, are removed, preferably at least 95 wt-%, more preferably at least 98 wt-%are removed.

The present embodiments relate to a recovery and purification of elements, such as nickel, cobalt, copper, manganese and lithium, from a black mass, and recycling lithium chemicals in the recovery and purification process.

A method for processing a black mass to battery chemicals typically comprises steps of:
1) leaching the black mass using sulfuric acid and a reducing agent to produce a first process solution comprising lithium sulfate and at least one of manganese sulfate, copper sulfate, nickel sulfate and cobalt sulfate, and impurities, which first process solution is separated from graphite by filtration;
2) removing impurities from the first process solution using lithium hydroxide, to produce a second process solution;
3) separating lithium from the second process solution using chromatographic lithium separation producing lithium sulfate and a third process solution;
4) separating at least one of copper, nickel and cobalt from the third process solution by ion exchange producing lithium sulfate; and
5) converting the lithium sulfate produced in step 3) and/or 4) by electrodialysis to lithium hydroxide to be used in at least one of the steps 2), 3) and 4), and to sulfuric acid to be used in step 1).

The method enables the use of chemicals based on lithium, an element already present in the black mass, and hence sodium sulfate generation can be avoided. In addition, lithium chemicals are made *on-site* and *in-situ* from lithium sulfate, which is an intermediate produced during hydrometallurgical processing of the black mass. Thus, the lithium chemicals produced are recycled to at least one of the steps 1, 2, 3, and 4. The on-site processing reduces significantly the overall CO₂ footprint of the process. Furthermore, separation of the lithium element is done using ion exchange in aqueous media, which has several advantages over liquid-liquid extractions. In the liquid-liquid extractions, kerosene will need to be replaced at regular intervals due to fouling, which is eliminated in the present method. So, lower operational expenses (OPEX) can be achieved. Further, the present method provides easier handling, because there is no ATEX (Appareils destines à être utilises en Atmospheres Explosives) requirements.

The first process solution comprises lithium sulfate and at least one of manganese sulfate, copper sulfate, nickel sulfate and cobalt sulfate, depending on the black mass. For example, the first process solution can comprise:
- lithium sulfate, manganese sulfate, nickel sulfate and cobalt sulfate,
- lithium sulfate, copper sulfate, nickel sulfate and cobalt sulfate, or
- lithium sulfate, manganese sulfate, copper sulfate, nickel sulfate and cobalt sulfate.

According to an embodiment, a solids concentration of the black mass can be 5-20 wt-%, preferably 9-12 wt-%, in the sulfuric acid in the step 1).

In the step 1), a mixture comprising the black mass and the sulfuric acid can be heated to 60-90 °C, preferably 70-80 °C. The leaching of step 1) is otherwise carried out as is known in the art.

In the step 1), the reducing agent can be for example, hydrogen peroxide. The mixture can be filtered for 0-4 hours, preferably 1-2 hours, after the addition of reducing agent to the mixture. This produces a metal-containing first process solution and a graphite/plastic solid filter cake. The first process solution is moved to the next step in a process, while the filter cake can be packed for reuse in graphite processing.

Step 2) of the method removal of impurities from the first process solution, to obtain a second process solution.

According to an embodiment, the step 2) further comprises a step of precipitating manganese oxide before or after removing other impurities, and step 5) comprises converting the lithium sulfate produced in step 3) and/or 4) by electrolysis to lithium persulfate to be used in step 2). According to a preferred embodiment, the manganese oxide is precipitated before removal of other impurities, i.e. manganese oxide is first precipitated from the first process solution, and the other impurities are then removed from the thus obtained manganese-purified process solution. Thus, precipitating manganese oxide from the first process solution using lithium persulfate is preferably made before the removal of other impurities using lithium hydroxide. The reason for this preferred order (first manganese, then other impurities) is that the oxidizing precipitation decreases pH of the process solution. If the manganese is removed after removing the other impurities, an extra pH adjusting step may be needed before step 3). Thus, removing manganese first enables to avoid the extra pH adjusting step before step 4). Manganese, if present, is thus precipitated using oxidative precipitation in step 2). Oxidative precipitation enables the use of lithium persulfate. Hence, using of ammonium persulfate is not necessary and thus generation of ammonium sulfate can be avoided.

If removing the other impurities (i.e. other than manganese, this expression being used throughout this text) is made before the precipitation of manganese oxide, the method preferably comprises a step 3a) after the step 2) and before the step 3), which step 3a) comprises adjusting of pH of the second process solution with lithium hydroxide. After adjusting of pH, the pH of the second process solution can be for example, at least 3, preferably 3 to 6. Such pH is preferable in view of the chromatographic separation of step 3).

According to an embodiment, a concentration of lithium persulfate is 20-30 wt-%, preferably 25-28 wt-%, in the step 2).

In the step 2), the first process solution from the step 1) can be heated to 70-90 °C, preferably to 75-85 °C. Lithium persulfate can be dosed according to:

MnSO₄ + Li₂S₂O₈ + H₂O → MnO₂ + Li₂SO₄ + H₂SO₄

According to embodiment, a molar ratio of lithium persulfate (LiPS) to manganese sulfate is 0.95-1.3:1, preferably 1-1.1:1. The LiPS is added to the reaction vessel, and as the reaction is endothermic, temperature can be followed closely to ensure the reaction takes place in optimal conditions.

After 1-5 hours, preferably 3-4 hours, from the last addition of LiPS, the mixture can be filtered and the solid manganese oxide can be removed from the process solution. Manganese oxide can be packed and stored for use in other processes. Alternatively, manganese oxide can be further processed to manganese sulfate.

In addition, potential organic solvents can be also oxidized to CO₂ by the LiPS in the step 2). This is a side effect of using oxidizing LiPS.

According to an embodiment, the other impurities are selected from a group of aluminum, fluoride and phosphorous. These impurities are removed from the process solution in the step 2).

The following equations can be considered in the step 2) for the removal of the other impurities:

Al₂(SO₄)₃ + 6LiOH → 2Al(OH)₃ + 3Li₂SO₄

Al(OH)₃ + 3F⁻ → AlF₃

Al(OH)₃ + PO₄³⁻ → AlPO₄

Fluoride and phosphorous can be expected to be in the form of metal fluorides and phosphates, but may also be present in acid form.

According to an embodiment, pH of the second process solution is 4-5.5, preferably 4.2-4.7 during the removal of the other impurities.

Aluminum as hydroxide can be reacted with the present fluorides (F) and phosphorous (P) for 1-6 hours, preferably 2-4 hours. This can precipitate phosphates to <1 ppm and fluoride to 20-60 ppm. A mixture can be filtered and a solid mixed Al/F/P filter cake can be packed for disposal and/or reuse. Residual fluoride may be absorbed onto an aluminum oxide bed, which improves purity of downstream products. The obtained second process solution is then moved to the next stage of the process.

According to some embodiments, the method further comprises a step 3b) before the step 3) and after step 2) and the optional step 3a) described above, which step 3b) comprises removing residual fluoride from the second process solution. Residual fluoride can be removed for example by passing it through a bed of activated alumina (AA). The AA can act as an absorbent for the fluoride, reducing the content of fluoride to <10 ppm. For example, 50-200 bed volumes, preferably 100-150 bed volumes, of the process solution is pumped through the AA bed. The contact time of the process solution can be for example, 3-8 minutes, preferably 5-6 minutes. Temperature can be for example, 10-60 °C, preferably 20-40 °C.

According to an embodiment, the chromatographic lithium separation of step 3) comprises:
- passing the second process solution containing lithium sulfate and at least one of nickel sulfate, cobalt sulfate and copper sulfate, through an acid cation exchange resin bed,
- collecting a lithium raffinate comprising lithium sulfate,
- eluting nickel sulfate, cobalt sulfate and copper sulfate from the acid cation exchange resin bed with a strong acid solution to obtain an eluate, and
- regenerating the acid cation exchange resin bed with lithium hydroxide for repeated use.

The chromatographic lithium separation of step 3) may be carried out for example as disclosed in European Patent Application No. 20206690.8, which description of this separation is hereby incorporated by reference. This separation step yields lithium sulfate as well as a third process solution, which is led to step 4) of the process.

In the first sub-step of the chromatographic lithium separation, the second process solution containing lithium sulfate and at least one of nickel sulfate, cobalt sulfate and copper sulfate, is passed through an acid cation exchange resin bed. The resin bed can be for example, carboxylic or sulfonic acid resin bed. A pH of the solution can be for example, 3-6.5, preferably 4-5.5. A rate of passing can be for example, 0.5-6 bed volumes per hour (BVs/h), preferably 2-4 BVs/h.

In the second sub-step of the chromatographic lithium separation, collection of lithium raffinate comprising lithium sulfate can be started at 0-1 bed volumes (BVs), preferably at 0.5-1 BVs. Other elements, i.e. nickel sulfate, cobalt sulfate and copper sulfate, can be retained in the resin until operating capacity is reached. The operating capacity can be predetermined by calculating the resin capacity from the element content of the initial feed. On the other hand, the operating capacity can be detected on-line by visual inspection or with spectroscopic methods such as by UV or other methods known by person skilled in the art. For a typical process solution containing 20-30 g/l of elements (i.e. lithium and other elements in total), the lithium raffinate can be collected at 0-3 BVs, preferably 0.5-2 BVs. Temperature during chromatographic separation can be 20-100 °C, preferably 25-50 °C and intra-column pressure can be from ambient pressure up to 10 bar, preferably between 1-5 bar.

As an optional sub-step after the second sub-step, the lithium raffinate can be re-circulated through the resin bed several times to further increase purity and concentration of lithium sulfate in the lithium raffinate. The resulting lithium raffinate can then be processed to lithium products such as lithium carbonate or lithium hydroxide using known hydrometallurgical methods.

In one further sub-step, also optional and performed on the lithium raffinate, the lithium raffinate solution can be used for flushing of the resin bed to increase purity and concentration of lithium of the lithium raffinate. The solution leaving the column after flushing can contain lithium salt and lithium hydroxide.

In the fourth sub-step of the chromatographic lithium separation (performed either after the second sub-step or after the third optional sub-step, if one is used), the other elements, i.e. nickel sulfate, cobalt sulfate and copper sulfate, can be eluted from the resin bed with 1-4 BVs of a strong acid solution. The strong acid solution can be for example, sulfuric acid or hydrochloric acid solution. A concentration of the strong acid solution can be for example, 10-25 wt-%, preferably 15-20 wt-%. Alternatively, other applicable strong acids can be used with the similar concentration. The acid solution is fed at a rate of 1-6 BVs/h, preferably 2-4 BVs/h. The resulting eluate can contain for example, nickel, cobalt, and/or copper in a form of salts, such as sulfates or chlorides, depending on the strong acid used.

After elution, the resin bed can be washed with 0.5-2 BVs, preferably 1-1.5 BVs, of water to remove any residual eluate.

In a final sub-step, the resin can be regenerated using for example, 2-25 wt-%, preferably 5-20 wt-%, lithium hydroxide solution. The lithium hydroxide can be fed through the resin bed at a rate of 1-6 BV/h, preferably 2-4 BV/h. After this step, the resin bed is ready for a new use for separating lithium.

The number of columns in series can be 1-10, preferably 2-6. Other techniques, such as simulated moving bed, can also be applied.

The eluate can then be processed into separate products using known metallurgical processes, such as liquid-liquid extractions, or using an eluate processing method described below.

In the said eluate processing method, an iminodiacetic acid (IDA) resin (for example Lanxess TP207 MDS) can be loaded with lithium by passing a 2-12 wt-%, preferably 5-10 wt-%, lithium hydroxide solution through the resin bed, then following with the eluate from the chromatographic lithium separation as described above. The amount of eluate pumped through the resin bed can be for example, 0.5-3 BV's, preferably 1-1.5 BVs, but also depends on the initial feed concentration. This process chromatographically separates nickel from cobalt, releasing lithium sulfate from the resin into the cobalt fraction. Nickel is recovered as nickel sulfate for selling. A cobalt/lithium sulfate is created for further processing. The resin can be then eluted using for example 1-3 BVs, preferably 1.5-2 BVs, of 5-25 wt-% sulfuric acid, preferably 15-20 wt-%, resulting in a nickel sulfate solution. Temperature during this stage can be 10-60 °C, preferably 20-50 °C.

Optionally, any residual nickel in the cobalt fraction can be separated using a bed of bis-picolyl amine resin or other method known to a person skilled in the art. Prior art also describes the option to separate nickel and cobalt from the process solution using bis-picolyl amines instead of IDA resins.

Cobalt can be separated from the cobalt fraction by the same process as the initial lithium separation in the step 4), as described above. In this process, nickel sulfate and cobalt sulfate for selling and a lithium sulfate solution for further use are created.

In step 4) of the method, at least one of copper, nickel and cobalt are separated from the third process solution by ion exchange. In ion exchange, chelating ion exchange resins can be used for separating nickel from cobalt. In this case, lithium is bound to the chelating ion exchange resin. When nickel is bound to the chelating ion exchange resin, lithium is released and mixed with cobalt. The step 4) thus enables of separating lithium sulfate from nickel and/or cobalt and/or copper, and creating lithium sulfate and a nickel/cobalt sulfate mix for further processing, as well as a copper sulfate solution for selling.

Alternatively, copper sulfate can be eluted after the step 1) or 2). In this case, there is no need for eluting copper sulfate in the step 4).

In the final stage of the process, in the step 5), lithium sulfate collected from step 3) and/or 4) is converted by electrodialysis to lithium hydroxide to be used in at least one of the steps 2), 3) and 4), and to sulfuric acid to be used in the step 1). A concentration of the lithium hydroxide solution obtained from the process can be for example, around 5-12 wt-%, preferably 8-10 wt-%. Thus, the lithium chemicals needed in the present method are made on-site and in-situ from lithium sulfate. Further, sodium sulfate generation can be avoided, because lithium-based chemicals are used instead of commonly used sodium hydroxide.

To maintain a stable sulfate balance in the process, lithium sulfate can be bled as required before electrolysis if sulfate content increases in the process, and vice versa if sulfate content decreases, additional sulfates can be added in the form of sulfuric acid in step 1.

The lithium persulfate can be produced using electrolysis of lithium sulfate. In anodic oxidation, lithium sulfate can be passed through a cell. The cell may comprise a boron doped diamond (BDD) anode, a platinum or iron (steel) cathode and a cation exchange membrane. The cation exchange membrane can be for example, Nafion N424. A current density can be for example, 250-2500 A/m², preferably 500-1250 A/m². Lithium persulfate is formed at the anode. The catholyte in the cell can be a water-based electrically conductive solution such as a sulfate solution. This reaction can be continued until desired concentration of lithium persulfate is achieved. The lithium persulfate used in step 2) may thus come from step 5 of the method, i.e. be recycled.

Optionally, an additional sulfate salt can be added to lithium sulfate before electrolysis in step 5). Such sulfate salt can be for example sulfuric acid or sodium sulfate. The amount of excess sulfate can be for example, 0.5-10 wt-%, preferably 1-5 wt-%, of the lithium sulfate content.

Once the desired concentration is achieved, lithium persulfate can be pumped from the system into a storage tank and fresh lithium sulfate can be added to the system. Lithium sulfate equivalent can be pumped into the system as lithium persulfate is taken out of the process.

According to an embodiment, the sulfuric acid which has been produced by electrodialysis is used in the step 3) or 4). So, sulfuric acid can be guided to the step 3) or 4) in addition of the step 1). In case sufficient amounts of sulfuric acid is created, it may be used in all of the steps 1), 3) and 4).

According to an embodiment, the step 5) further comprises concentrating the lithium hydroxide before use in at least one of the steps 2), 3) and 4). Thus, lithium hydroxide is immediately ready for use in the steps 2), 3) and 4).

According to another embodiment, the step 5) further comprises concentrating the sulfuric acid before use in at least one of the step 1), 3) and/or 4). Thus, sulfuric acid is in this case immediately ready for use in the step 1) and optionally in the step 3) or 4).

According to an embodiment, the step 5) further comprises crystallizing of excess lithium hydroxide. Thus, the excess lithium hydroxide, which is not needed in the process, can be processed for further use, such as storage or selling.

### DETAILED DESCRIPTION OF THE DRAWINGS

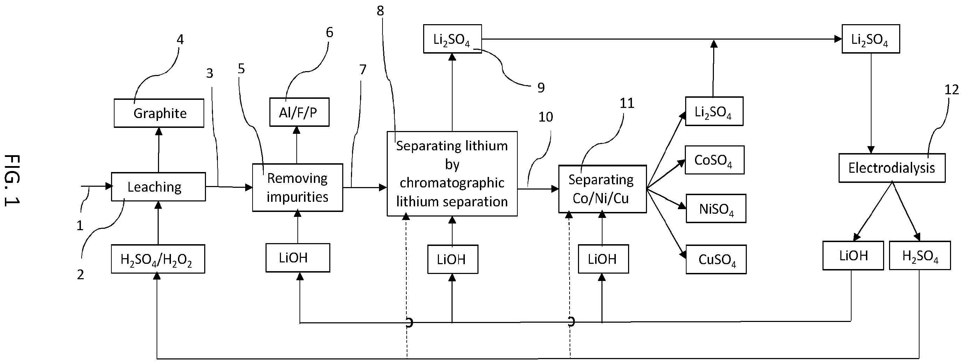

FIGURE 1 illustrates a method for processing a black mass to battery chemicals in accordance with a first embodiment. In a first step, a black mass 1 is fed to leaching 2, where it is leached using for example sulfuric acid (H₂SO₄) and hydrogen peroxide (H₂O₂) to produce a first process solution and graphite. The first process solution 3 is led to a second process step after separation from graphite 4. In a second step 5 impurities, such as aluminum (Al), fluoride (F) and phosphorus (P), are removed from the first process solution 3 using lithium hydroxide (LiOH). The impurities 6 are separated, and the solution, i.e. the second process solution 7 is led to a third step. In the third step 8, the second process solution 7 from the removal of impurities is treated using chromatographic lithium separation, whereby lithium is separated from the second process solution creating lithium sulfate 9 and a third process solution 10, which is led to a fourth step. In the fourth step, copper (Cu), nickel (Ni) and/or cobalt (Co) are separated from the third process solution by ion exchange 11 using lithium hydroxide, forming also lithium sulfate (Li₂SO₄). Finally, lithium sulfate collected from the third and fourth step is converted by electrodialysis 12 to lithium hydroxide and sulfuric acid. Lithium hydroxide is transferred to the second step as well as to the third and fourth step. Sulfuric acid is transferred to the first step and optionally to the third or fourth step.

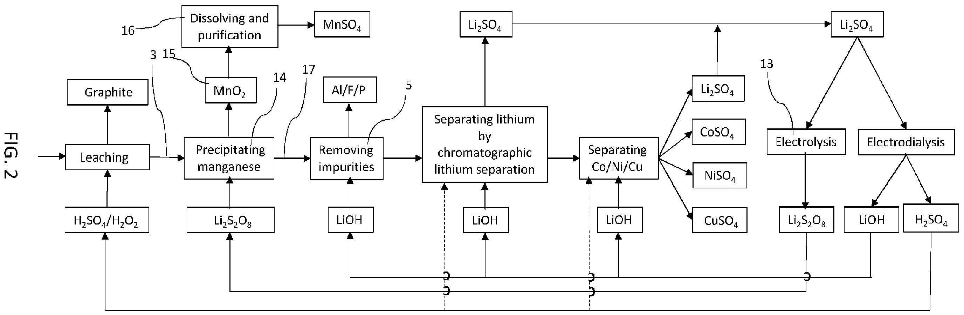

FIGURE 2 illustrates a second embodiment of the present method. In this embodiment, manganese oxide (MnO₂) is precipitated in a precipitation step 14 from the first process solution 3 using lithium persulfate (Li₂S₂O₈) before the second step described above. Manganese oxide 15 is further processed to manganese sulfate (MnSO₄) via dissolving and purification 16. The rest of the process is as in the embodiment of FIGURE 1, i.e. the first process solution without manganese 17 is led to the impurities removal step. Additionally, the process comprises electrolysis 13, which converts the lithium sulfate to lithium persulfate to be used in the manganese precipitation 14.

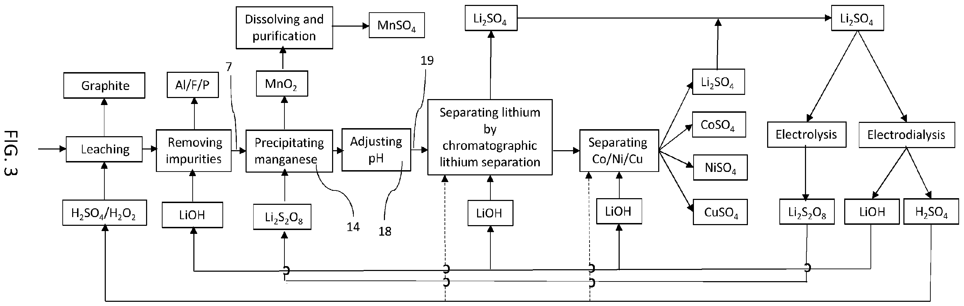

FIGURE 3 illustrates a third embodiment of the present method. In this embodiment, manganese oxide (MnO₂) is precipitated in a precipitation step 14 after the second step described above in connection with FIGURE 1, i.e. from the second process solution 7. Thereafter, pH is adjusted in a separate step 18, and the thus obtained second process solution without manganese 19 is led to the chromatographic separation.

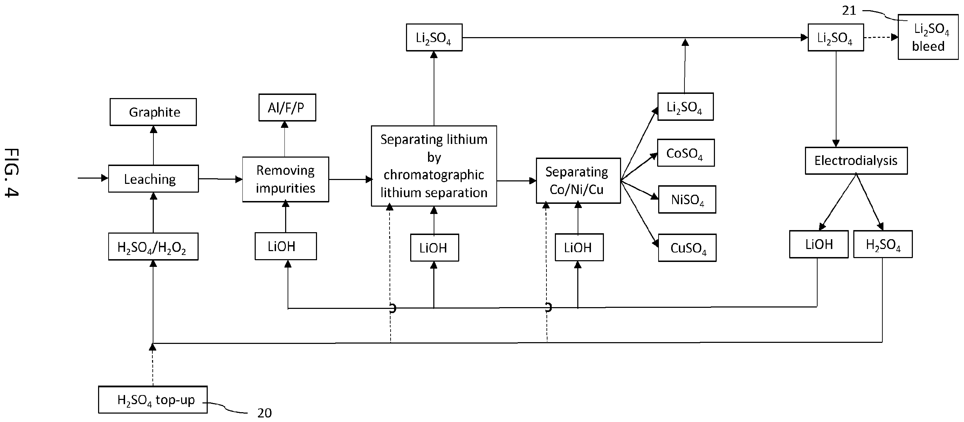

FIGURE 4 illustrates a fourth embodiment, wherein an optional further step is illustrated, namely a step where the lithium sulfate is partially removed, i.e. bled, from the process in a step 21, in case an excess is accumulating. Similarly, an optional step is a top-up of sulfuric acid 20, in case there is a need. Such needs may raise for example when the constitution of the black mass changes.

### EXAMPLES

Black mass containing NCM based cathode material was dissolved in sulfuric acid using hydrogen peroxide as a reducing agent to obtain a dissolved black mass process solution. Mixture is filtered, and filtrate is analysed with Inductively Coupled Plasma Optical Emission Spectrometer (ICP-OES) (Thermo Scientific) for metal content, ion-selective electrode (ISE) for fluoride content and total organic content (TOC) with a Shimadzu TOC-L instrument. Table 1 is an analysis of a typical process solution after leaching and the examples below are derived from a solution such as this. The analytical methods for elements are also the same in all experiments unless otherwise specified.

**Table 1. Element content of a typical process solution from leached black mass**

| Element | mg/l |
|---|---|
| Al, ICP-OES | 1954 |
| Co, ICP-OES | 10160 |
| Cu, ICP-OES | 3253 |
| Li, ICP-OES | 3704 |
| Mn, ICP-OES | 9056 |
| Ni, ICP-OES | 10080 |
| P, ICP-OES | 70,2 |
| F, ISE | 128 |
| TOC | 184 |

Aluminum, copper, fluoride, phosphorous and TOC content can vary depending on the technology chosen for production of black mass from LIBs.

### Example 1

A 200 g/l lithium sulfate solution was circulated through an Electro MP Cell (Electrocell) with a BDD anode and platinum cathode, both 100 cm². 12.5 A current was induced from a power source. Temperature was kept at a stable 20 °C during the process. Circulation was continued for approximately 6.5 hours and samples were taken at regular intervals and persulfate concentration was determined by a colorimetric back titration method. At 6 hours, persulfate concentration had reached 240 g/l and plateaued. Current was stopped and persulfate solution stored.

2000 ml of process solution was heated to 80 °C in a jacketed glass reactor under constant 300 rpm stirring. 400 ml of 240 g/l lithium persulfate solution was added. Mixture temperature dropped and was heated back to 80 °C. 4 hours after addition of LiPS the mixture was filtered and the filtrate was analysed. The analysis results are presented in Table 2.

**Table 2. Composition of the filtrate from oxidative manganese precipitation**

| Element | mg/l |
|---|---|
| Al, ICP-OES | 1640 |
| Co, ICP-OES | 7237 |
| Cu, ICP-OES | 2573 |
| Li, ICP-OES | 5605 |
| Mn, ICP-OES | 2 |
| Ni, ICP-OES | 8160 |
| P, ICP-OES | 34 |
| F, ISE | 121 |
| TOC | 45 |

Manganese was thus selectively precipitated to low levels with no losses in Ni/Co. Some phosphorous was also removed in this step, and most of the organic solvents had been oxidated to CO₂.

### Example 2

2200 ml of process solution from Example 1 was heated to 80 °C. pH was increased to 5 with 128 g/l LiOH solution, total required 833 ml. Solution was added by pumping at a rate of 1 ml/min. 1 hour after pH was reached, mixture was filtered and the filtrate analysed with results presented in Table 3.

**Table 3. Composition of the filtrate from aluminium, fluoride and phosphorous precipitation**

| Element | mg/l |
|---|---|
| Al, ICP-OES | 20,1 |
| Co, ICP-OES | 5192 |
| Cu, ICP-OES | 933,6 |
| Li, ICP-OES | 11660 |
| Mn, ICP-OES | < 0,10 |
| Ni, ICP-OES | 5826 |
| P, ICP-OES | 0,4 |
| F, ISE | 41 |
| TOC | 27 |

Aluminum was thus precipitated selectively, which also precipitated a significant amount of fluoride and all phosphorous. Reduction in metal concentrations were largely due to dilution which can be lessened by using a slurry of strong lithium hydroxide solution.

### Example 3

5 1 of a process solution from the above Example 2 was pumped through 60 g of activated aluminum oxide, with retention time of 5 minutes. The entire fraction was collected and analysed with results presented in Table 4.

**Table 4. Composition of the process liquor after treatment with activated aluminum oxide**

| Element | mg/l |
|---|---|
| Al, ICP-OES | 0,4 |
| Co, ICP-OES | 6275 |
| Cu, ICP-OES | 911 |
| Li, ICP-OES | 9225 |
| Mn, ICP-OES | < 0,10 |
| Ni, ICP-OES | 7083 |
| P, ICP-OES | < 1,4 |
| F, ISE | < 10 |
| TOC | <20 |

Fluoride, phosphorous and aluminum were all absorbed into the activated alumina, leaving all other metals in solution.

### Example 4

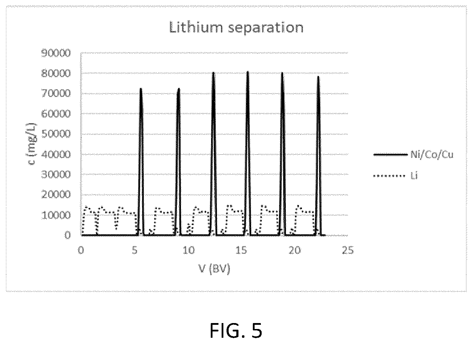

Three (3) YMC ECO25 chromatographic columns were packed with 310 ml per column of Finex CA16G-H-P resin with carboxylic acid functionality. Resins were loaded with lithium by passing 1 BV 10 wt-% lithium hydroxide solution through the columns at 0.5 BV/h. 1500 ml process solution from Example 3 was then pumped through the column series starting at column 1 at 1 BV/h, followed by 310 ml water, 260 ml 20 wt-% sulfuric acid and finally another 310 ml water and 310 ml 10 wt-% LiOH solution through the first column. These cycle parameters were continued by feeding into column 2, then column 3 before repeating column 1. 120 ml samples were collected and analysed. Cycle was repeated six times for a total of two repeats through all columns and results are presented in FIGURE 5.

FIGURE 5 shows that clear separation of lithium from nickel, cobalt and copper is observed. In the FIGURE, the full line indicates the curve for nickel, cobalt and copper, while the dashed line is for lithium. V (BV) stands for the volume of the resin bed used, while c stands for concentration in mg/l.

### Example 5

Three (3) YMC ECO25 chromatographic columns were packed with 300 ml per column of Lewatit MonoPlus TP207 H+ resin with iminodiacetic acid functionally. 540 ml 10 wt-% LiOH solution was pumped through the resin columns, followed by 2000 ml water, followed by 1000 ml process solution from lithium separation, i.e. Example 4, followed by 1600 ml water. 710 ml of lithium fraction was collected, then followed by 700 ml of cobalt fraction. Columns were eluted with 300 ml 20 wt-% sulfuric acid and lastly washed with water until breakthrough ran clear. 500 ml of nickel fraction was collected. 100 ml samples were collected and analysed, and a mass balance for nickel, cobalt and lithium was made and presented in Table 5.

**Table 5. Mass balance for nickel, cobalt and lithium in separation of nickel and cobalt**

| wt-% | Nickel | Cobalt | Lithium |
|---|---|---|---|
| Co | 22 wt-% | 87 wt-% | 0 wt-% |
| Li | 0 wt-% | 23 wt-% | 80 wt-% |
| Ni | 67 wt-% | 39 wt-% | 0 wt-% |

Separation of nickel and cobalt was thus clear, with minimal loss of lithium in the cobalt fraction. The cobalt fraction can then be purified by a process similar to the one described in Example 4 to recover lithium.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "an embodiment" means that a particular feature, structure, or characteristic described in connection with the embodiment is included in at least one embodiment of the present invention. Thus, appearances of the phrase "in an embodiment" in various places throughout this specification are not necessarily all referring to the same embodiment.

The verb "to comprise" is used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

## Claims

1. A method for processing a black mass to battery chemicals comprising steps of:
1) leaching the black mass using sulfuric acid and a reducing agent to produce a first process solution comprising lithium sulfate and at least one of manganese sulfate, copper sulfate, nickel sulfate and cobalt sulfate, and impurities, which first process solution is separated from graphite by filtration;
2) removing impurities from the first process solution using lithium hydroxide, to produce a second process solution;
3) separating lithium from the second process solution using chromatographic lithium separation producing lithium sulfate and a third process solution;
4) separating at least one of copper, nickel and cobalt from the third process solution by ion exchange producing lithium sulfate; and
5) converting the lithium sulfate produced in step 3) and/or 4) by electrodialysis to lithium hydroxide to be used in at least one of the steps 2), 3) and 4), and to sulfuric acid to be used in step 1).

2. The method of claim 1, wherein step 2) further comprises a step of precipitating manganese oxide before or after removing other impurities and step 5) comprises converting the lithium sulfate produced in step 3) and/or 4) by electrolysis to lithium persulfate to be used in step 2).

3. The method of claim 1 or 2, wherein a solids concentration of the black mass is 5-20 wt-%, preferably 9-12 wt-%, in the sulfuric acid in the step 1).

4. The method of any one of the preceding claims, wherein a concentration of lithium persulfate is 20-30 wt-%, preferably 25-28 wt-%, in the step 2).

5. The method of any one of the preceding claims, wherein an additional sulfate salt is added to lithium sulfate before electrolysis in step 5).

6. The method of any one of the preceding claims, wherein a molar ratio of lithium persulfate to manganese sulfate is 0.95-1.3:1, preferably 1-1.1:1, in the step 2).

7. The method of any one of the preceding claims, wherein the impurities are selected from a group of aluminum, fluoride and phosphorous.

8. The method of any one of the preceding claims, wherein pH of the second process solution is 4-5.5, preferably 4.2-4.7.

9. The method of claim 7, wherein the method further comprises a step 3a) before the step 3), which step 3a) comprises removing residual fluoride from the second process solution.

10. The method of any one of the preceding claims, wherein the chromatographic lithium separation of step 3) comprises:
- passing the second process solution containing lithium sulfate and at least one of nickel sulfate, cobalt sulfate and copper sulfate, through an acid cation exchange resin bed,
- collecting a lithium raffinate comprising lithium sulfate,
- eluting nickel sulfate, cobalt sulfate and copper sulfate from the acid cation exchange resin bed with a strong acid solution to obtain an eluate, and
- regenerating the acid cation exchange resin bed with lithium hydroxide for repeated use.

11. The method according to claim 10, wherein the lithium raffinate is re-circulated through the acid cation exchange resin bed.

12. The method of any one of the preceding claims, wherein the sulfuric acid which has been produced by electrodialysis is used in the step 3) or 4).

13. The method of any one of the preceding claims, wherein the step 5) further comprises concentrating the lithium hydroxide before use in at least one of the steps 2), 3) and 4).

14. The method of any one of the preceding claims, wherein the step 5) further comprises concentrating the sulfuric acid before use in at least one of the steps 1), 3) and/or 4).

15. The method of any one of the preceding claims, wherein the step 5) further comprises crystallizing of excess lithium hydroxide for further use.
